# EUROPEAN PATENT SPECIFICATION

(11) **EP 3 428 478 B1**
(45) Date of publication and mention of the grant of the patent: **03.08.2022**
(21) Application number: 17762897.1
(22) Date of filing: 21.02.2017
(51) Int. Cl.: F16F 15/123, F16D 13/64, F16F 1/12

(54) **DAMPER APPARATUS**
DÄMPFERVORRICHTUNG
APPAREIL AMORTISSEUR

(30) Priority: 11.03.2016 JP 2016047875
(43) Date of publication of application: 16.01.2019
(73) Proprietor: AISIN CORPORATION, Aichi 448-8650 (JP)
(72) Inventor: OSUMI, Tomoya, Kariya-shi, Aichi-ken 448-8650 (JP); KUMAOKA, Tsuyoshi, Kariya-shi, Aichi-ken 448-8650 (JP); FUKAYA, Nobuki, Kariya-shi, Aichi-ken 448-8650 (JP)
(74) Representative: Cabinet Beau de Loménie
(86) International application number: PCT/JP2017/006283
(87) International publication number: WO 2017/154554

(56) References cited:
- EP-A1- 1 348 886
- EP-A1- 1 975 457
- EP-A1- 2 511 555
- JP-B2- 3 264 294
- JP-B2- 5 223 999
- JP-B2- 5 625 676
- JP-U- H01 146 040
- US-A1- 2012 322 565

## Description

### Technical Field

The present invention relates to a damper apparatus used for a clutch disk or the like.

### Background Art

JP 3381396 B2 discloses a conventional damper apparatus used for a clutch disk or the like. In this damper apparatus, a flanged hub and a plate disposed around the flanged hub to face a flange of the flanged hub are elastically linked with each other in a circumferential direction via a spring, and an input from the plate side is transmitted to the flanged hub side via the spring while being buffered by a deflection and shrinkage of the spring.

EP 2 511 555 A1 discloses a damper apparatus according to the preamble of claim 1.

### Summary of Invention

In such a conventional damper apparatus, there is a problem that an unintended hysteresis torque different from the designing time occurs in rotational vibration absorption near the beginning of the deflection of the spring as a rotation number is increased.

As a result of intensive researches in view of such a problem, the present inventors have found that when in rotational vibration absorption near the beginning of the deflection of the spring, the flange of the flanged hub repeatedly exerts a pressure against and separates from a seat on an end face of the spring, surface sliding occurs between the flange and the seat and the surface sliding causes the unintended hysteresis torque.

The present invention was invented based on the above findings . An object of the present invention is to provide a damper apparatus capable of suppressing an unintended hysteresis torque.

A damper apparatus according to the present invention includes the features of appended claim 1, and notably:
a pressing plate;
a rotating plate disposed so as to face the pressing plate; an elastic member elastically linking the pressing plate and the rotating plate in a circumferential direction; and
a seat provided on a circumferential-direction end face of the elastic member,
wherein the seat has a circumferentially protruding convex face on an inner diameter side,
the pressing plate and the rotating plate each have a concave face capable of engaging with the convex face, and
with the convex face of the seat engaged with the concave face of the rotating plate, a gap is formed between the convex face of the seat and the concave face of the pressing plate.

According to the present invention, since the gap is formed between the convex face of the seat and the concave face of the pressing plate in the state in which the convex face of the seat is engaged with the concave face of the rotating plate, even when the pressing plate repeatedly exerts the pressure against and separates from the seat, the surface sliding does not occur between the convex face of the seat and the concave face of the pressing plate. As a result, the occurrence of the unintentional hysteresis torque can be suppressed when the deflection of the elastic member begins.

In the damper apparatus according to the present invention, the seat has a contact part that can come into contact with the pressing plate on an outer diameter side, and the gap may be formed between the convex face of the seat and the concave face of the pressing plate when the pressing plate presses the seat to begin the deflection of the elastic member.

In the damper apparatus according to the present invention, when the pressing plate further presses the seat, the seat may be rotated about the contact part to engage the convex face of the seat with the concave face of the pressing plate.

In the damper apparatus according to the present invention, when the pressing plate presses the seat to begin the deflection of the elastic member, the seat presses the outer diameter side of the elastic member, and after the seat is rotated to engage the convex face of the seat with the concave face of the pressing plate, the seat may press a central axis of the elastic member.

### Brief Description of Drawings

Fig. 1 is a schematic plan view of a damper apparatus according to an embodiment of the present invention.
Fig. 2 is a cross-sectional view taken along the line A-A of a part of the damper apparatus shown in Fig. 1.
Fig. 3 is a cross-sectional view taken along the line B-B of the damper apparatus shown in Fig. 2.
Fig. 4 is a cross-sectional view taken along the line C-C of the damper apparatus shown in Fig. 2 and is a cross-sectional view of the damper apparatus in an initial state.
Fig. 5 is a cross-sectional view taken along the line C-C of the damper apparatus shown in Fig. 2 and is a cross-sectional view of the damper apparatus when a flanged hub comes into contact with a seat during rotation.
Fig. 6 is a cross-sectional view taken along the line C-C of the damper apparatus shown in Fig. 2 and is a cross-sectional view of the damper apparatus when the flanged hub separates from the seat during the rotation.
Fig. 7 is a cross-sectional view taken along the line C-C of the damper apparatus shown in Fig. 2 and is a cross-sectional view of the damper apparatus when the flanged hub presses the seat during the rotation.
Fig. 8 is a cross-sectional view of the conventional damper apparatus when the flanged hub comes into contact with the seat during rotation.
Fig. 9 is a cross-sectional view of the conventional damper apparatus when the flanged hub separates from the seat during the rotation.
Fig. 10 is a view showing twisting characteristics of the damper apparatus.
Fig. 11 is a diagram for explaining a hysteresis torque of the conventional damper apparatus.
Fig. 12 is a diagram for explaining a hysteresis torque of the damper apparatus according to an embodiment of the present invention.

### Description of Embodiments

Hereinafter, embodiments of the present invention will be described in detail with reference to the accompanying drawings. It is to be noted that the embodiments described below are merely examples of implementing the present invention, and the present invention is not limitedto detailed configurations describedbelow. For implementing the present invention, the detailed configurations according to the embodiment may be appropriately adopted.

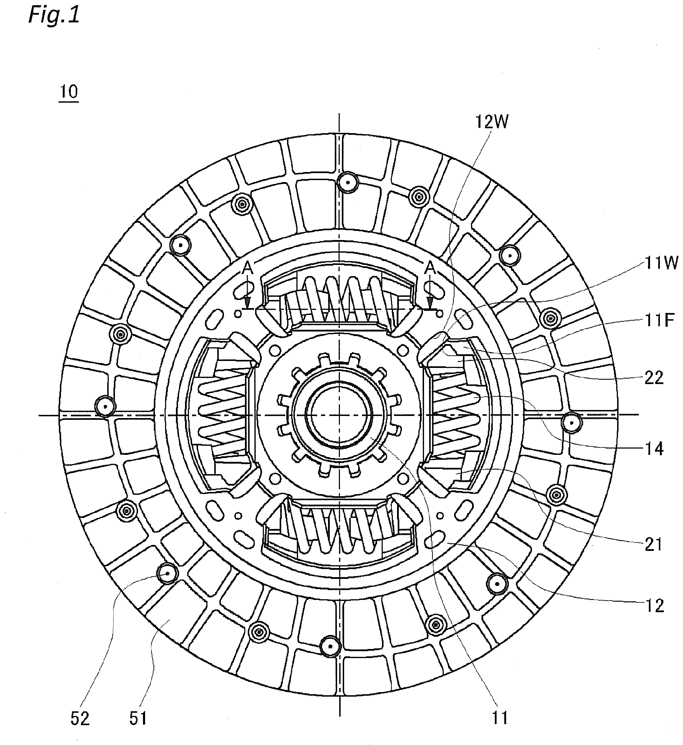

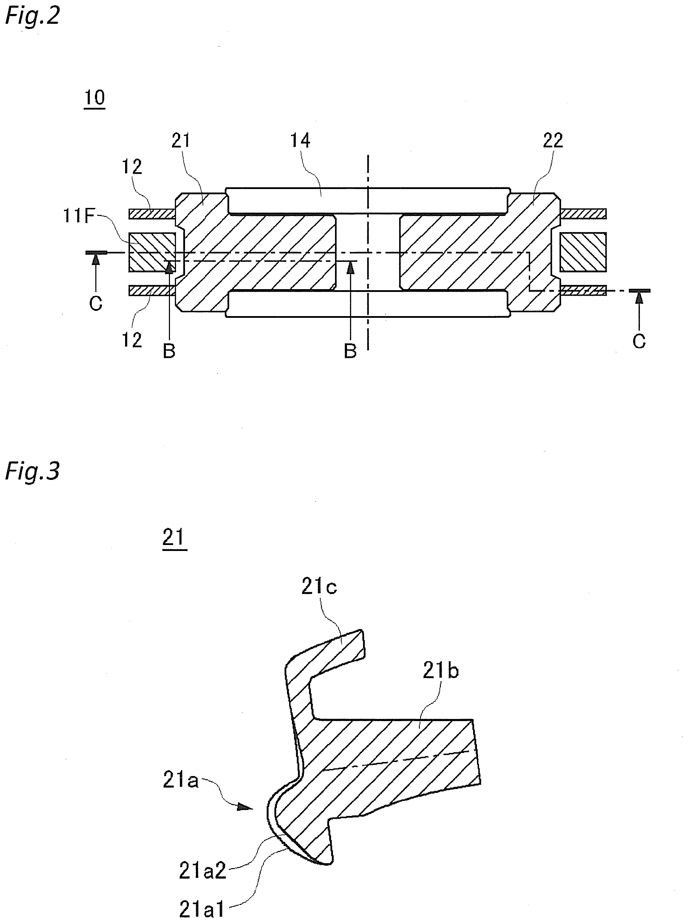

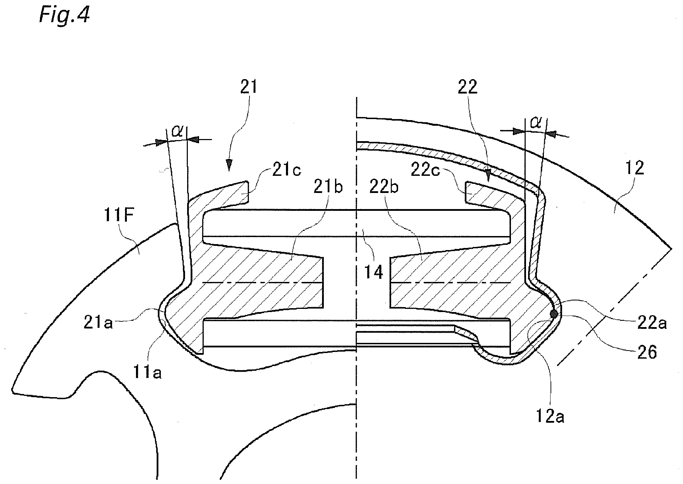

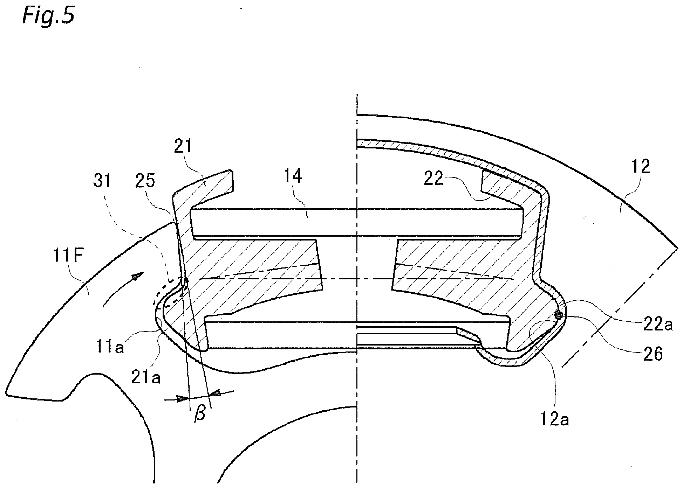

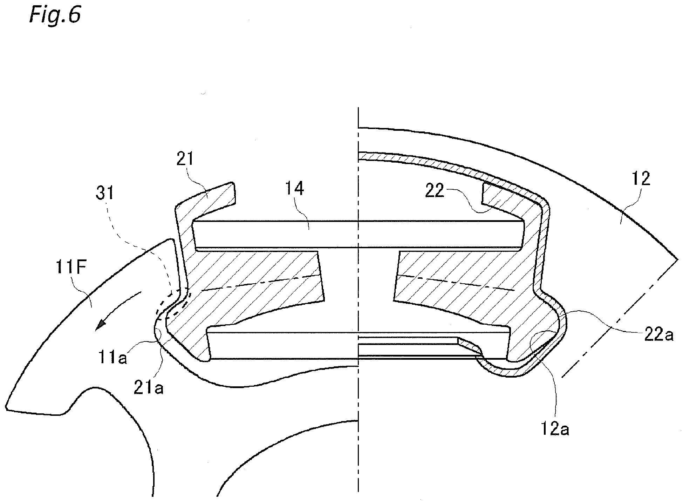

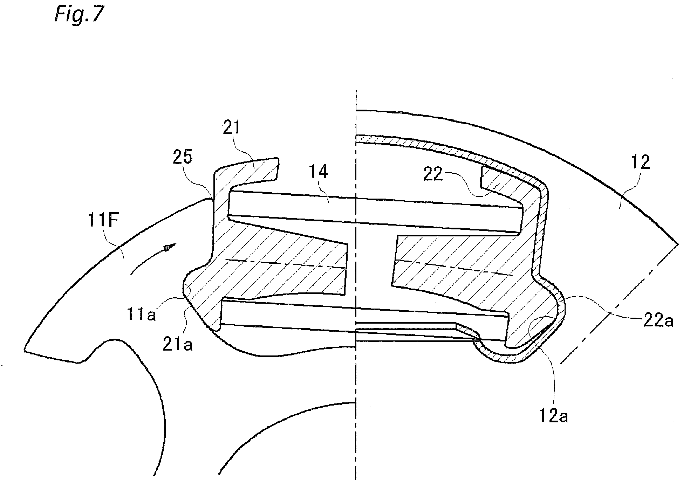

Fig. 1 is a schematic plan view of a damper apparatus according to an embodiment of the present invention. Fig. 2 is a cross-sectional view taken along the line A-A of a part of the damper apparatus shown in Fig. 1. Fig. 3 is a cross-sectional view taken along the line B-B of a seat 21 of the damper apparatus shown in Fig. 2. Fig. 4 is a cross-sectional view taken along the line C-C of the damper apparatus shown in Fig. 2 and is a cross-sectional view of the damper apparatus in an initial state. Fig. 5 is a cross-sectional view taken along the line C-C of the damper apparatus shown in Fig. 2 and is a cross-sectional view of the damper apparatus when a flanged hub comes into contact with a seat during rotation. Fig. 6 is a cross-sectional view taken along the line C-C of the damper apparatus shown in Fig. 2 and is a cross-sectional view of the damper apparatus when the flanged hub separates from the seat during the rotation. Fig. 7 is a cross-sectional view taken along the line C-C of the damper apparatus shown in Fig. 2 and is a cross-sectional view of the damper apparatus when the flanged hub presses the seat during the rotation.

As shown in Fig. 1, a damper apparatus 10 according to the present embodiment includes a flanged hub 11, a disk plate 12 disposed so as to face the flanged hub 11, an elastic member 14 elastically linking the flanged hub 11 and the disk plate 12 in a disk circumferential direction, and seats 21 and 22 provided on a circumferential-direction end face of the elastic member 14. In the present embodiment, the flanged hub 11 corresponds to a "pressing plate" of the claims, and the disk plate 12 corresponds to a "rotating plate" in the claims.

The damper apparatus 10 according to the present embodiment is used, for example, for a clutch disk of a friction clutch disposed between an engine of an automobile and a transmission. In this case, a large number of corrugated leaf springs, in which a facing 51 which can be sandwiched between a flywheel as a driving shaft and a pressure plate is fixed to both sides by a rivet 52, are fixed to an outer circumferential part of the disk plate 12 by the rivet. Further, a transmission input shaft as an output shaft is spline-engaged with a hub of the flanged hub 11.

The flanged hub 11 has a cylindrical hub and a flange 11F (see Fig. 2) which extends from an outer circumferential part of the hub in a disk radial direction. The disk plate 12 has a substantially disk shape and is disposed so as to face the flange 11F around the hub of the flanged hub 11.

Although the elastic member 14 is a coil spring in the shown example, the elastic member 14 may be rubber or the like as long as it is an elastic body. In the following description, the elastic member 14 may be referred to as a spring.

As shown in Fig. 1, the disk plate 12 is provided with a plurality of windows 12W extending in the disk circumferential direction, and the flange 11F of the flanged hub 11 is provided with a plurality of notches 11W facing the windows 12W. The window 12W and the notch 11W facing each other is constituted by a set, and the elastic member 14 is disposed in each set of window 12W and notch 11W is disposed in a state of being deflected and shrunk by a predetermined amount. As a result, the elastic member 14 is assembled to the flanged hub 11 and the disk plate 12.

As shown in Fig. 2 and Figs. 4 to 7, the seats 21 and 22 are disposed between the disk circumferential-direction end face of the elastic member 14 and a disk circumferential-direction end face of the window 12W and the notch 11W in a state of being sandwiched by a reaction force of the elastic member 14. Therefore, the disk circumferential-direction end face of the window 12W and the disk circumferential-direction end face of the notch 11W can come into contact with the disk circumferential-direction end face of the elastic member 14 via the seats 21 and 22.

In the example shown, a central part in a disk radial direction of one side surface of the seats 21 and 22 that abut on the disk circumferential-direction end face of the elastic member 14 is provided with spring holding protruding parts 21b and 22b fitted into the coil of the spring 14 and holding the spring 14 so that the spring holding protruding parts 21b and 22b protrude in the disk circumferential direction with respect to the side surface. In addition, an outer side in the disk radial direction on the side surface is provided with seat outer circumferential holding parts 21c and 22c that hold an outer circumference of the spring 14 so that the seat outer circumferential holding parts 21c and 22c protrude in the disk circumferential direction with respect to the one side surface.

Meanwhile, an inner side in the disk radial direction of the other side surface of the seats 21 and 22 is integrally provided with convex faces 21a and 22a having a semicircular cross section extending in a disk axial direction so that the convex faces 21a and 22a protrude in the disk circumferential direction with respect to the other side surface.

In this embodiment, as shown in Fig. 3, a part 21a1 facing the disk circumferential-direction end face of the window 12W of the disk plate 12 in the convex face 21a of the seat 21 is formed to protrude in the disk circumferential direction, compared with a part 21a2 facing the disk circumferential-direction end face of the notch 11W of the flanged hub 11. Although not shown, the convex face 22a of the other seat 22 has also the same shape.

As shown in Figs. 4 to 7, the disk circumferential-direction end faces of the notch 11W of the flanged hub 11 and the window 12W of the disk plate 12 are each provided with concave faces 11a and 12a having a semicircular shape which is the same cross-sectional shape as the convex faces 21a and 22a so that the concave faces 11a and 12a face the convex faces 21a and 22a of the seats 21 and 22. The convex faces 21a and 22a of the seats 21 and 22 are fitted into the concave face 11a of the flanged hub 11 or the concave faces 12a of the disk plate 12, such that the seats 21 and 22 can be held on the flanged hub 11 or the disk plate 12 in the disk circumferential and radial directions.

As shown in Fig. 4, the window 12W of the disk plate 12 has a fan shape, and the convex faces 21a and 22a of the seats 21 and 22 abut on the concave face 12a of the disk plate 12 in an initial state without rotation, and an outer side part in the disk radial direction of the disk circumferential-direction end face of the window 12W is inclined by a predetermined angle α with respect to side surfaces facing the seats 21 and 22. As a result, as shown in Fig. 5, if a centrifugal force directed outward in the disk radial direction is applied to the seats 21 and 22 during rotation, the seats 21 and 22 are rotated about a contact part 26 with the disk plate 12 by a predetermined angle α with respect to the disk plate 12, such that the convex faces 21a and 22a of the seats 21 and 22 are held by being engaged with the concave face 12a of the disk plate 12.

As shown in Figs. 5 and 6, the notch 11W of the flanged hub 11 has a fan shape, and a gap 31 is formed between the convex faces 21a and 21b of the seats 21 and 22 and the concave face 11a of the flanged hub 11 in the state in which the convex faces 21a and 22a of the seats 21 and 22 are held by being engaged with the concave face 12a of the disk plate 12.

Further, as shown in Fig. 5, the seat 21 has a contact part 25 which can come into contact with the flanged hub 11 on the outer side in the disk radial direction, and the gap 31 is formed between the convex face 21a of the seat 21 and the concave face 11a of the flanged hub 11 when the flanged hub 11 presses the seat 21 to begin the deflection of the elastic member 14.

More specifically, as shown in Fig. 5, the disk circumferential-direction end face of the notch 11W of the flanged hub 11 is inclined by a predetermined angle β with respect to the opposed side surfaces of the seat 21 when the flanged hub 11 presses the seat 21 to begin the deflection of the elastic member 14. As a result, as shown in Fig. 7, when the flanged hub 11 further presses the seat 21, the seat 21 rotates about the contact part 25 for the flanged hub 11 by the predetermined angle β with respect to the flanged hub 11, such that the convex face 21a of the seat 21 can be held by being engaged with the concave face 11a of the flanged hub 11.

As shown in Fig. 5, since a pressing force from the flanged hub 11 is applied to the contact part 25 on the outer side in the disk radial direction of the seat 21 when the flanged hub 11 presses the seat 21 to begin the deflection of the elastic member 14, the seat 21 presses an outer diameter side of the elastic member 14. On the other hand, as shown in Fig. 7, since the pressing force from the flanged hub 11 is uniformly applied to the opposed side surfaces of the seat 21 in the state in which the convex face 21a of the seat 21 is held by being engaged with the concave face 11a of the flanged hub 11, the seat 21 uniformly presses the outer diameter side and the inner diameter side of the elastic member 14.

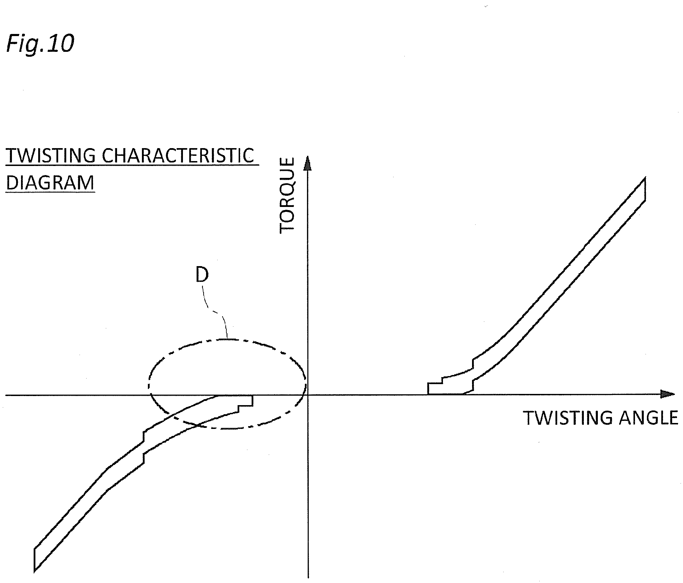

Next, the operation of the damper apparatus 10 having such a configuration will be described. At the time of the connection of the clutch, a torque from the engine is input to the disk plate 12 via the facings 51 and the corrugated plate spring, transmitted from the disk plate 12 to the flanged hub 11 via the elastic member 14, and output from the flanged hub 11 to the transmission. At this time, the flanged hub 11 and the disk plate 12 are subjected to a relative twisting rotation shown in Fig. 10 while deflecting and shrinking the elastic member 14, according to the input torque value, such that a buffering action acts on the torque transmission from the disk plate 12 to the flanged hub 11.

Although not shown, the damper apparatus 10 itself includes a known hysteresis mechanism, and imparts the hysteresis to the twisting characteristics when the flanged hub 11 and the disk plate 12 are subjected to the relative twisting rotation and exerts a damping action on the torque transmission from the disk plate 12 to the flanged hub 11. As the hysteresis mechanism, for example, it is possible to adopt a configuration as described in paragraph 0013 of Japanese Patent No. 3381396.

In the present embodiment, as shown in Figs. 4 and 5, when the rotation is applied to the damper apparatus 10, the seats 21 and 22 are subjected to a centrifugal force directed outward in the disk radial direction, and thus are rotated about the contact part 26 with the disk plate 12 by the predetermined angle α. As a result, the twisting characteristics can be obtained by the rotation of the seats 21 and 22 before the twisting characteristics due to the deflection and shrinkage of the elastic member 14.

As shown in Fig. 5, the seats 21 and 22 are rotated by the predetermined angle α with respect to the disk plate 12, such that the convex faces 21a and 22a of the seats 21 and 22 are engaged with the concave face 12a of the disk plate 12. As a result, the seats 21 and 22 can be reliably held.

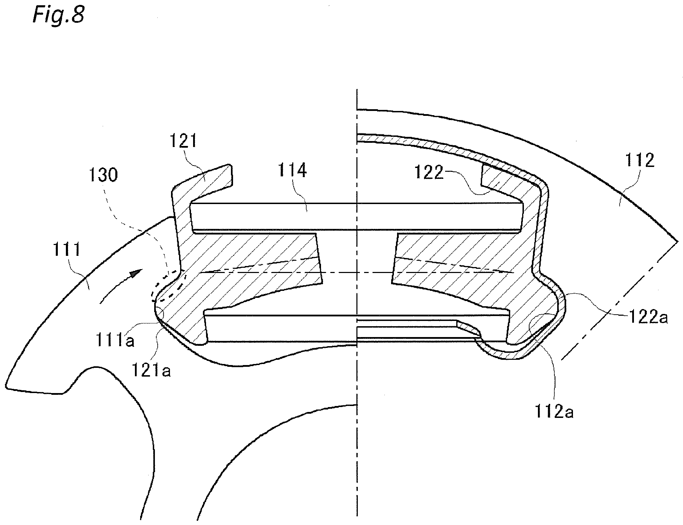

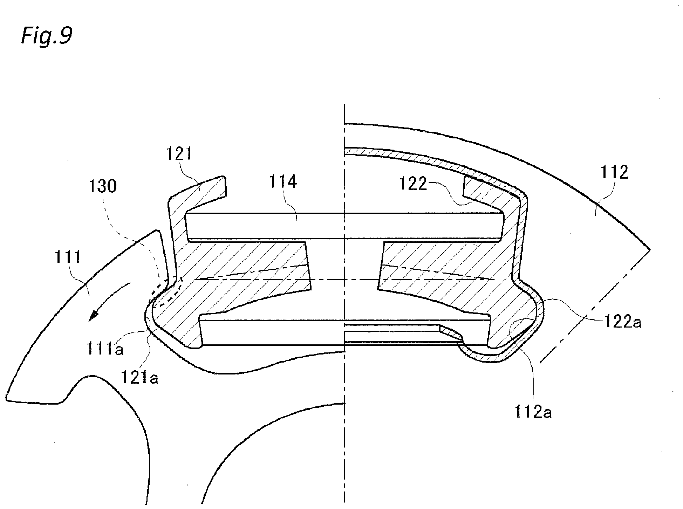

As described above, as shown in Figs. 8 and 9, in a state in which convex faces 121a and 122a of seats 121 and 122 are engaged with a concave face 112a of a disk plate 112, the conventional damper apparatus has a contact part 130 at which the convex face 121a of the seat 121 and a concave face 111a of a flanged hub 111 come into contact with each other.

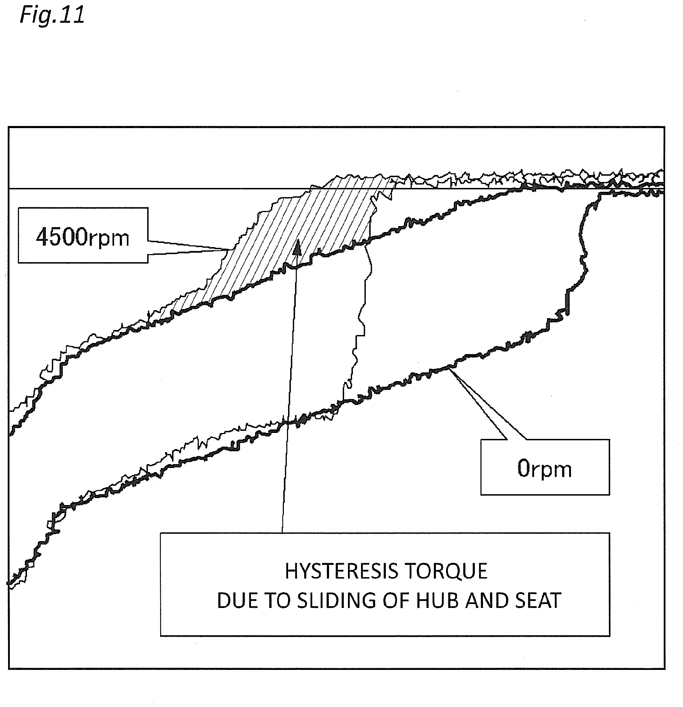

For this reason, in the rotational vibration absorption (corresponding to an area surrounded by the one-dot chain line denoted by symbol D in Fig. 10) near the beginning of the deflection of the spring 114, when the flanged hub 111 repeatedly exerts the pressure against and separates from the seat 121, surface sliding occurs at the contact part 130 between the concave face 111a of a flange 111F and the convex face 121a of the seat 121. As the rotation number of the damper apparatus is increased, the centrifugal force applied to the seats 121 and 122 is increased, such that the surface sliding is also increased As shown in Fig. 11, an unintended hysteresis torque different from the designing time occurs due to the influence of the surface sliding.

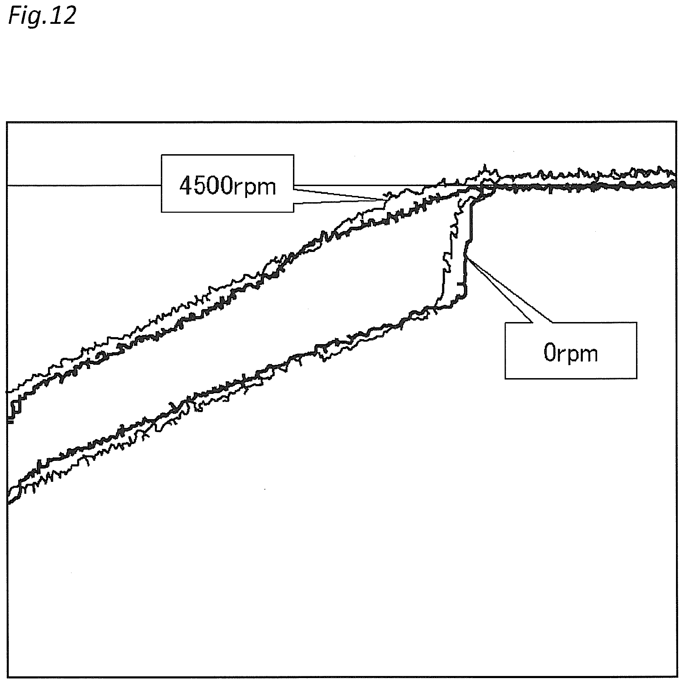

On the other hand, in the present embodiment, as shown in Figs. 5 and 6, in a state where the convex faces 21a and 22a of the seats 21 and 22 are engaged with the concave face 12a of the disk plate 12, the gap 31 is formed between the convex face 21a of the seat 21 and the concave face 11a of the flanged hub 11. For this reason, even when the flanged hub 11 repeatedly exerts the pressure against and separates from the seat 21, the surface sliding does not occur between the convex face 21a of the seat 21 and the concave face 11a of the flanged hub 11. As a result, as shown in Fig. 12, the hysteresis torque similar to the designing time can be realized in the rotational vibration absorption (corresponding to the area surrounded by the one-dot chain line denoted by symbol D in Fig. 12) near the beginning of the deflection of the spring 14.

In addition, in the present embodiment, as shown in Fig. 5, when the flanged hub 11 presses the seat 21 to begin the deflection of the elastic member 14, the flanged hub 11 and the seat 21 come into contact with each other at one point of the contact part 25, such that the occurrence of the unintended hysteresis torque due to the surface sliding can be reliably prevented.

As shown in Fig. 7, when the flanged hub 11 further presses the seat 21, the seat 21 is rotated about the contact part 25 by the predetermined angle β, and thus the convex face 21a of the seat 21 is engaged with the concave face 11a of the flanged hub 11. As a result, the seat 21 can be reliably pressed and held.

Here, as shown in Fig. 5, when the flanged hub 11 presses the seat 21 to begin the deflection of the elastic member 14, the seat 21 presses the outer diameter side of the elastic member 14, but as shown in Fig. 7, after the seat 21 is rotated to engage the convex face 21a of the seat 21 with the concave face 11a of the flanged hub 11, the seat 21 presses a central axis of the elastic member 14 (in other words, the outer diameter side and the inner diameter side of the elastic member 14 are uniformly pressed). In this way, the elastic member 14 is pressed stepwise, such that a torque step in the damper apparatus 10 can be reduced

As described above, according to the present embodiment, since the gap is formed between the convex face 21a of the seat 21 and the concave face 11a of the flanged hub 11 in the state in which the convex face 21a of the seat 21 is engaged with the concave face 12a of the disk plate 12, even when the flanged hub 11 repeatedly exerts the pressure against and separates from the seat 21, the surface sliding does not occur between the convex face 21a of the seat 21 and the concave face 11a of the flanged hub 11. As a result, the occurrence of the unintentional hysteresis torque can be suppressed when the deflection of the elastic member 14 begins.

In addition, according to the present embodiment, when the flanged hub 11 presses the seat 21 to begin the deflection of the elastic member 14, the gap is formed between the convex face 21a of the seat 21 and the concave face 11a of the flanged hub 11, and since the flanged hub 11 and the seat 21 come into contact with each other at one point of the contact part 25, it is possible to reliably prevent the occurrence of the unintended hysteresis torque due to the surface sliding.

In addition, according to the present embodiment, when the flanged hub 11 further presses the seat 21, the seat 21 is rotated about the contact part 25 to engage the convex face 21a of the seat 21 with the concave face 11a of the flanged hub 11, such that the seat 21 can be reliably pressed and held.

In addition, according to the present embodiment, when the flanged hub 11 presses the seat 21 to begin the deflection of the elastic member 14, the seat 21 presses the outer diameter side of the elastic member 14, and since the seat 21 is rotated to engage the convex face 21a of the seat 21 with the concave face 11a of the flanged hub 11 and then the seat 21 presses the central axis of the elastic member 14, the elastic member 14 is pressed stepwise, such that the torque step of the damper apparatus 10 is reduced.

In the embodiment described above, as shown in Fig. 3, the part 21a1 facing the disk circumferential-direction end face of the window 12W of the disk plate 12 in the convex face 21a of the seat 21 is formed to protrude in the disk circumferential direction, compared with the part 21a2 facing the disk circumferential-direction end face of the notch 11W of the flanged hub 11, but the present invention is not limited thereto. For example, the concave face 11a of the flanged hub 11 may be formed to be recessed in the disk circumferential direction as compared with the concave face 12a of the disk plate 12. According to this aspect, the gap 31 can be formed between the convex face 21a of the seat 21 and the concave face 11a of the flanged hub 11 in the state in which the convex face 21a of the seat 21 is engaged with the concave face 12a of the disk plate 12, such that the same action and effect as those of the above-described embodiment can be obtained.

In addition, in the embodiment described above, the flanged hub 11 corresponds to the "pressing plate" of the claims, and the disk plate 12 corresponds to the "rotating plate" in the claims, but the present invention is not limited thereto. For example, the disk plate 12 may correspond to the "pressing plate" of the claims, and the flanged hub 11 may correspond to the "rotating plate" in the claims . In this case, the torque input to the flanged hub 11 is transmitted to the disk plate 12 via the elastic member 14 while being buffered by the deflection and contraction of the elastic member 14, but even in such an aspect, the same action and effect as the above-described embodiment can be obtained.

### Reference Signs List

10 Damper apparatus
11 Flanged hub (pressing plate)
11F Flange
12 Disk plate (rotating plate)
14 Elastic member
21, 22 Seat
21a, 22a Convex part
21a1 Part facing disk circumferential-direction end face of window of disk plate
22a2 Part facing disk circumferential-direction end face of notch of flanged hub
21b, 22b Seat elastic member holding protruding part
21c, 22c Seat outer circumferential holding part
25 Contact part
31 Gap
51 Facing
52 Rivet

## Claims

1. A damper apparatus (10), comprising:
a pressing plate (11);
a rotating plate (12) disposed so as to face the pressing plate (11);
an elastic member (14) elastically linking the pressing plate (11) and the rotating plate (12) in a circumferential direction; and
first and second seats (21, 22), each provided on a circumferential-direction end face of the elastic member (14),
wherein each seat (21, 22) has a circumferentially protruding convex face (21a) on an inner diameter side,
the pressing plate (11) and the rotating plate (12) each have concave faces (11a, 12a) capable of engaging with the convex face (21a) of each seat (21, 22), and
with the convex faces (21a, 22a) of the seats (21, 22) engaged with the concave faces (12a) of the rotating plate (12), a gap (31) is formed between the convex face (21a) of the first seat (21) and the concave face (11a) of the pressing plate (11),
**characterized in that** the first seat (21) has a contact part (25) capable of contacting the pressing plate (11) on an outer diameter side, and
configured so that a gap is formed between the convex face (21a) of the first seat (21) and the concave face (11a) of the pressing plate (11) when the pressing plate (11) presses the first seat (21) to begin a deflection of the elastic member (14).
wherein when the pressing plate (11) further presses the first seat (21), the first seat (21) is configured to rotate about the contact part (25) to engage the convex face (21a) of the first seat (21) with the concave face (11a) of the pressing plate (11) .

2. The damper apparatus according to claim 1,
wherein when the pressing plate (11) presses the seat (21) to begin the deflection of the elastic member (14), the first seat (21) is configured to press an outer diameter side of the elastic member (14), and after the first seat (21) is rotated to engage the convex face (21a) of the first seat (21) with the concave face (11a) of the pressing plate (11), the first seat (21) is configured to press a central axis of the elastic member (14).

## Patentansprüche

1. Dämpfervorrichtung (10), umfassend:
eine Druckplatte (11),
eine Drehplatte (12), die derart angeordnet ist, dass sie der Druckplatte (11) zugewandt ist,
ein elastisches Element (14), das die Druckplatte (11) und die Drehplatte (12) in einer Umfangsrichtung elastisch verbindet, und
einen ersten und einen zweiten Sitz (21, 22), die jeweils auf einer Endfläche des elastischen Elements (14) in der Umfangsrichtung bereitgestellt sind,
wobei jeder Sitz (21, 22) eine in der Umfangsrichtung hervorstehende konvexe Fläche (21a) auf einer Innendurchmesserseite aufweist,
die Druckplatte (11) und die Drehplatte (12) jeweils konkave Flächen (11a, 12a) aufweisen, die in der Lage sind, mit der konvexen Fläche (21a) jedes Sitzes (21, 22) in Eingriff zu gelangen, und
wobei, wenn die konvexen Flächen (21a, 22a) der Sitze (21, 22) mit den konkaven Flächen (12a) der Drehplatte (12) in Eingriff gelangen, ein Spalt (31) zwischen der konvexen Fläche (21a) des ersten Sitzes (21) und der konkaven Fläche (11a) der Druckplatte (11) gebildet wird,
**dadurch gekennzeichnet, dass**
der erste Sitz (21) einen Kontaktteil (25) aufweist, der in der Lage ist, die Druckplatte (11) auf einer Außendurchmesserseite zu kontaktieren, und
derart ausgestaltet ist, dass ein Spalt zwischen der konvexen Fläche (21a) des ersten Sitzes (21) und der konkaven Fläche (11a) der Druckplatte (11) gebildet wird, wenn die Druckplatte (11) den ersten Sitz (21) drückt, um eine Durchbiegung des elastischen Elements (14) zu beginnen,
wobei der erste Sitz (21), wenn die Druckplatte (11) den ersten Sitz (21) weiter drückt, dazu ausgestaltet ist, sich um den Kontaktteil (25) zu drehen, um die konvexe Fläche (21a) des ersten Sitzes (21) mit der konkaven Fläche (11a) der Druckplatte (11) in Eingriff zu bringen.

2. Dämpfervorrichtung nach Anspruch 1,
wobei der erste Sitz (21), wenn die Druckplatte (11) den Sitz (21) drückt, um die Durchbiegung des elastischen Elements (14) zu beginnen, dazu ausgestaltet ist, eine Außendurchmesserseite des elastischen Elements (14) zu drücken, und der erste Sitz (21) dazu ausgestaltet ist, eine mittlere Achse des elastischen Elements (14) zu drücken, nachdem der erste Sitz (21) gedreht wurde, um die konvexe Fläche (21a) des ersten Sitzes (21) mit der konkaven Fläche (11a) der Druckplatte (11) in Eingriff zu bringen.

## Revendications

1. Appareil amortisseur (10), comprenant :
une plaque de pression (11) ;
une plaque rotative (12) disposée de manière à faire face à la plaque de pression (11) ;
une élément élastique (14) reliant élastiquement la plaque de pression (11) et la plaque rotative (12) dans une direction circonférentielle ; et
des premier et deuxième sièges (21, 22), prévu chacun sur une face d'extrémité de direction circonférentielle de l'élément élastique (14),
dans lequel chaque siège (21, 22) a une face convexe (21a) faisant saillie dans la direction circonférentielle sur un côté de diamètre intérieur,
la plaque de pression (11) et la plaque rotative (12) ont chacune des faces concaves (11a, 12a) en mesure de se mettre en prise avec la face convexe (21a) de chaque siège (21, 22), et
avec les faces convexes (21a, 22a) des sièges (21, 22) en prise avec la faces concaves (12a) de la plaque rotative (12), un espacement (31) est formé entre la face convexe (21a) du premier siège (21) et la face concave (11a) de la plaque de pression (11),
**caractérisé en ce que**
le premier siège (21) a une partie de contact (25) en mesure d'entrer en contact avec la plaque de pression (11) sur un côté de diamètre extérieur, et
configuré de sorte qu'un écart est formé entre la face convexe (21a) du premier siège (21) et la face concave (11a) de la plaque de pression (11) lorsque la plaque de pression (11) appuie sur le premier siège (21) pour commencer une déviation de l'élément élastique (14),
dans lequel lorsque la plaque de pression (11) appuie encore plus sur le premier siège (21), le premier siège (21) est configuré pour tourner autour de la partie de contact (25) pour mettre en prise la face convexe (21a) du premier siège (21) avec la face concave (11a) de la plaque de pression (11).

2. Appareil amortisseur selon la revendication 1,
dans lequel lorsque la plaque de pression (11) appuie sur le siège (21) pour commencer la déviation de l'élément élastique (14), le premier siège (21) est configuré pour appuyer sur un côté de diamètre extérieur de l'élément élastique (14), et après que le premier siège (21) a été mis en rotation pour mettre en prise la face convexe (21a) du premier siège (21) avec la face concave (11a) de la plaque de pression (11), le premier siège (21) est configuré pour appuyer sur un axe central de l'élément élastique (14).
